# EUROPÄISCHE PATENTANMELDUNG

(11) **EP 2 329 906 A1**
(43) Veröffentlichungstag der Anmeldung: **08.06.2011**
(21) Anmeldenummer: 10015031.7
(22) Anmeldetag: 26.11.2010
(51) Int. Cl.: B23K 26/00, B23K 26/40, D06C 23/00, D06M 10/00, D06M 23/16, D06Q 1/10

(54) **Verfahren zur Herstellung von Mustern bei Teppichbodenbelägen mit Laserstrahl, Vorrichtung zur Durchführung des Verfahrens sowie unter Verwendung des Verfahrens und der Vorrichtung hergestellte Teppichbodenbeläge**

(30) Priorität: 03.12.2009 DE 102009056340
(71) Anmelder: ANKER-Teppichboden Gebr. Schoeller GmbH + Co.KG, 52353 Düren (DE)
(72) Erfinder: Binder, Ines, Dipl.-Ing., 31840 Hessisch-Oldendorf (DE); Hoffe, Gerd, Dipl.-Ing., 31840 Hessisch-Oldendorf (DE)
(74) Vertreter: Schmetz, Bruno

(57) **Zusammenfassung**

Die Erfindung betrifft ein Verfahren zur Herstellung von Mustern bei Teppichbodenbelägen (2), die wenigstens teilweise aus thermisch plastifizierbarem Fasermaterial bestehen, eine Vorrichtung (1) zur Durchführung dieses Verfahrens sowie unter Verwendung des Verfahrens und der Vorrichtung hergestellte Teppichbodenbeläge (2). Es handelt sich dabei um ein Verfahren mit einem Lasergerät (3), mit dem die Oberseite des Teppichbodenbelags (2) thermisch behandelt wird. Das Lasergerät (3) ist verfahrbar und sendet mindestens einen Laserstrahl auf die Oberseite des Teppichbodenbelags (2) aus, wodurch das Teppichoberseitenmaterial zum Zwecke der Teppichmusterbildung durch Plastifizierung verändert wird. Dieses Verfahren hat zahlreiche Vorteile. Es wird berührungslos durchgeführt und ermöglicht die schnelle und sehr genaue Herstellung selbst komplizierter Teppichmuster.

## Beschreibung

Die Erfindung betrifft ein Verfahren und eine Vorrichtung zur Herstellung von Mustern bzw. Dessins bei Teppichbodenbelägen, die wenigstens teilweise aus thermisch plastifizierbaren Fasermaterial im Teppichpol bestehen, sowie unter Verwendung des Verfahrens bzw. der Vorrichtung hergestellte Teppichbodenbeläge. Derartige textile Bodenbeläge sind allgemein bekannt. Im wesentlichen werden sie als Bahnenware (Wand-zu-Wand-Teppichbodenbeläge) und Fliesenware hergestellt. Die vorliegende Erfindung eignet sich für beide Warenarten und kann sofort bei der Teppichfertigung, aber auch nachträglich bei fertigen Teppichbodenbelägen angewandt werden.

Die bisher bekannten Verfahren zur Dessinierung und Colorierung von Oberflächen für textile Bodenbeläge beruhen auf der Stückfärbung, der Verarbeitung von gefärbten Garnen, der Textildrucktechnologie, der Bindungstechnik beim Weben im Schaft- und Jacquard-Bereich sowie der Strukturbildung bei der Tufting- bzw. Webtechnik. Diese bekannten Verfahren haben jedoch gewisse Nachteile, die insbesondere darin begründet sind, dass sie technisch relativ aufwändig sind, denn sie beruhen auf einem mechanischen Kontakt zwischen dem eingesetzten Polmaterial und den Werkzeugen zur Musterbildung des textilen Bodenbelags. Außerdem sind die Möglichkeiten der Musterbildung und Farbgebung technisch bedingt trotz aller Fortschritte recht beschränkt.

Der vorliegenden Erfindung liegt daher die Aufgabe zugrunde, ein Verfahren und eine Vorrichtung zur Herstellung von Mustern bei Teppichbodenbelägen der eingangs genannten Art zu schaffen, bei dem die Nachteile des vorgenannten Standes der Technik vermieden werden und außerdem die Möglichkeit besteht, vergleichsweise einfach und schnell relativ komplizierte Musterungen bzw. Dessinierungen, Farbgebungen und Effekte zu verwirklichen.

Diese Aufgabe wir bei einem Verfahren der gattungsgemäßen Art erfindungsgemäß dadurch gelöst, dass die Oberseite des Teppichbodenbelags mittels eines Lasergerätes thermisch behandelt wird, welches über dem Teppichbodenbelag und im Abstand von diesem angeordnet ist und verfahrbar ist, wobei mit dem Lasergerät mindestens ein Laserstrahl auf die Oberseite des Teppichs gerichtet wird und durch die daraus resultierende Wärmeeinwirkung des Laserstrahls bzw. der Laserstrahlen und die Verfahrbewegung des Lasergerätes das Teppichoberseitenmaterial zum Zwecke der Teppichmusterbildung durch Plastifizierung verändert wird.

Dieses Verfahren hat zunächst den Vorteil, dass damit auf berührungslose Weise Teppichmuster gebildet werden können. Es gibt also keinen mechanischen Kontakt zwischen dem als Werkzeug dienenden Lasergerät und dem Teppichbodenbelag. Dabei wird mit dem erfindungsgemäßen Verfahren die an sich bekannte Lasertechnik angewandt. Mit einem Lasergerät wird bekanntlich ein energiereicher Lichtstrahl erzeugt, der zum Beispiel über zwei computergesteuerte Drehspiegel in kürzester Zeit an jeden beliebigen Punkt des textilen Bodenbelages geführt werden kann. Mit Hilfe einer Linse in dem Lasergerät wird der Laserstrahl gebündelt, so dass ein Fokuspunkt mit maximaler Energiedichte bei kleinstem Strahldurchmesser erzeugt wird. Dieser Brennpunkt des Laserstrahls ist das eigentliche Werkzeug, mit dem die Oberfläche des Teppichbodenbelags verändert wird. Denn durch das in dem Teppichobermaterial enthaltene thermisch plastifizierbare Fasermaterial ist es möglich, dass der energiereiche Laserstrahl an dem betreffenden Fokuspunkt die dortige Teppichfaser bzw. Polformation verändert, wobei von einer Plastifizierung der Oberfläche gesprochen werden kann. Es handelt sich hier also um ein neues Musterungsverfahren durch Faserveränderung und erhöhte Kräuselung bis hin zur Plastifizierung der Oberfläche des Teppichbodenbelags. Entsprechend den jeweiligen Anforderungen lassen sich die Eigenschaften des Fokussierungspunktes des Laserstrahles durch verschiedene Parameter festlegen und bestimmen, damit die Höhendifferenzen und die Plastifizierungsintensität das jeweils vom Hersteller gewünschte Gestaltungsergebnis der Oberfläche des Teppichbodenbelages ergibt.

Durch die auch sehr schnell mögliche Verfahrbewegung des Lasergerätes können in entsprechend kurzer Zeit Teppichmusterelemente, also zum Beispiel Linienmuster, Rechteckmuster, aber auch komplizierte Muster (beispielsweise Bilder von Tieren oder dergleichen) auf bzw. in dem Teppichbodenbelag angefertigt werden. Da es sich um eine thermische Behandlung handelt und die mit dem erfindungsgemäßen Verfahren produzierten Teppichmuster je nach Höhe der Polschicht auch einen dreidimensionalen bzw. Struktur-Effekt hervorrufen können, kann bei dem vorliegenden Verfahren auch von einer "Thermo-Gravur" (TG+) gesprochen werden. Dadurch können mit dem neuen Verfahren auch Strukturen in der Teppichoberseite erzeugt werden, die mit den bisher bekannten Dessinierungs- bzw. Colorierungsverfahren nicht möglich bzw. darstellbar waren, weil dabei keine Umwandlung des verwendeten Fasermaterials im Pol erfolgte.

Die vorgenannte, sich bei dem erfindungsgemäßen "Thermo-Gravur"-Verfahren als Struktur ausbildende Oberflächengestaltung macht es außerdem möglich, Gegensätzlichkeiten wie "Hoch/Tief", "Weich/Hart" oder "Matt/Glänzend" darzustellen. Es können also auch an sich gegensätzliche Gestaltungsmerkmale gleichzeitig realisiert bzw. in Verbindung gebracht werden. Auf diese Weise lassen sich auch haptische (taktile) Merkmale bei einem Teppichmuster in Bezug auf die Struktur (hoch/tief sowie weich/hart oder matt/glänzend) der Ware realisieren. Es ist dadurch auch möglich, Schattierungseffekte zu erzielen.

Außerdem hat sich als erfindungswesentlicher Vorteil herausgestellt, dass die thermische Behandlung mit dem vorliegenden "Thermo-Gravur"-Verfahren zu keinerlei Beeinträchtigungen der Teppicheigenschaften beispielsweise in Bezug auf die Isolation, die Schalldämmung und den Begehkomfort führt. Außerdem führt das "Thermo-Gravur"-Verfahren zu keinen Veränderungen des Musterbildes bei der Begehung entsprechender Teppichböden, und zwar selbst bei höchster Beanspruchung infolge längerer und intensiverer Druckbeanspruchung durch Schuhsohlen, Rollen von Bürostühlen, Behindertenrollstühlen etc. Dies bedeutet also, dass es keine Beeinträchtigungen des Verschleißverhaltens gegenüber normal dessinierten Teppichbodenbelägen nach den zur Zeit bekannten Verfahren der Gestaltung im textilen Bereich gibt. Vielmehr stellt die Verdichtung der Oberfläche der Teppichbodenbeläge durch die Laserbehandlung sogar eine zusätzliche Verbesserung des Verschleißverhaltens bzw. der Strapazierfähigkeit dar, und zwar bei gleichzeitiger Stabilisierung des Musterbildes.

Nicht unerwähnt bleiben darf die Umweltfreundlichkeit des erfindungsgemäßen "Thermo-Gravur"-Verfahrens, da bei der Dessinierung mit diesem Laser-System weder Wasser, Dampf noch andere Trockenkapazitäten für die Gestaltung der textilen Bodenbeläge benötigt werden. Mit dem erfindungsgemäßen Verfahren können im übrigen sowohl Flachgewebe, Teppiche nach der Web- und der Tufttechnologie als auch Nadelfilzbeläge dessiniert werden. Außerdem können mit dem neuen Verfahren sowohl Halbfabrikate als auch gefärbte und beschichtete Teppiche in der Oberfläche dessiniert werden.

Ein weiterer Vorteil ist darin zu sehen, dass die Rapportgenauigkeit bei dem erfindungsgemäßen Verfahren in einem Maße erreicht wird, wie es die bisher bekannten Verfahren, wo Feuchtigkeit und Wärme zur coloristischen bzw. farblichen Gestaltung bzw. zur Oberflächengestaltung notwendig sind, nicht erzielen können. Durch die Dessinierung der fertigen Teppichbodenbeläge, die sowohl bei Bahnenware von 200 cm oder auch 400 cm Breite als auch bei der Fliesenform erfolgen kann, wird eine hundertprozentige Rapportgenauigkeit der Dessinierung gewährleistet.

Gemäß einer vorteilhaften Ausführungsform des erfindungsgemäßen "Thermo-Gravur"-Verfahrens wird die thermische Oberflächenbehandlung des Teppichbodenbelags mit einem Lasergerät durchgeführt, das von einer programmierbaren Steuerungseinheit gesteuert wird, um bestimmte Teppichmuster herzustellen. Dabei können leistungsstarke Computersysteme bei der Steuerung des Lasergerätes zum Einsatz kommen. Das computerbasierte "Thermo-Gravur"-Verfahren vermeidet außerdem das aufwändige Erstellen und Verwalten von Teppichdessins sowie mechanische Applikationen bei der Colorierung. Die Musterungen sind wegen der hohen Rechnerkapazitäten frei programmierbar, wodurch ein hohe Maß an künstlerischer Kreativität für die Oberflächengestaltung erreicht wird. Es eröffnet sich also ein weites Gestaltungsfeld für Designer, das es in diesem Ausmaße bisher noch nicht für die Gestaltung von Oberflächen textiler Bodenbeläge gab. Die Anwendung der Lasertechnik in Verbindung mit einer computergestützt arbeitenden elektronischen Steuerungseinheit ermöglicht im übrigen eine wesentliche Verkürzung der Entwicklungszeit bei Teppichbodenbelägen und den zugehörigen Musterungen, insbesondere bei Sonderanfertigungen. Dies erlaubt sozusagen eine "Just-in-time"-Fertigung auch bei Teppichbodenbelägen. Dabei kann praktisch jede Losgröße ohne besonders hohen Preisaufschlag gefertigt werden, was einen enormen wirtschaftlichen Vorteil bedeutet.

Gemäß einer weiteren vorteilhaften Ausführungsform des erfindungsgemäßen Verfahrens wird der Teppichbodenbelag während der thermischen Oberflächenbehandlung auf der Teppichfertigungsstrecke vorwärts bewegt. Dies bedeutet, dass das erfindungsgemäße "Thermo-Gravur"-Verfahren auch in einen Teppichfertigungsprozeß nach dem Durchlaufverfahren (Bahnenware) integriert werden kann, so dass entsprechend hergestellte Bahnenware im letzten Teil der Fertigung zwecks Teppichmusterbildung dem erfindungsgemäßen "Thermo-Gravur"-Verfahren unterzogen wird. Dabei kann es vorteilhaft sein, dass der Teppichbodenbelag gleichzeitig während der thermischen Oberflächenbehandlung mit einer mehr oder weniger großen Geschwindigkeit vorwärts bewegt wird.

Eine besonders günstige Vorrichtung zur Durchführung des erfindungsgemäßen Verfahrens sieht vor, dass ein Tisch oder dergleichen zur horizontalen Auflage des Teppichbodenbelags vorgesehen ist und darüber sowie im Abstand von dem Teppichbodenbelag ein verfahrbares Lasergerät angeordnet ist, mit dem mindestens ein Laserstrahl auf die Oberseite des Teppichbodenbelags zum Zwecke der Teppichmusterbildung gerichtet werden kann. Dies bedeutet, dass sowohl eine einzelne Teppichbodenfliese als auch Teppichbahnenware auf einen Arbeitstisch aufgelegt wird, um dann dem vorgenannten "Thermo-Gravur"-Verfahren unterzogen zu werden. In vorteilhafter Weise weist das Lasergerät dabei eine Verfahreinrichtung auf, mit der es oberhalb des Teppichbodenbelages in horizontaler und vertikaler Richtung frei verfahrbar ist. Dazu wird in vorteilhafter Weise eine computergestützte programmierbare Steuerungseinheit eingesetzt.

Statt einer horizontalen Auflage des Teppichbodenbelags kann die Vorrichtung auch so beschaffen sein, dass der betreffende Auflagetisch oder eine andere für den Teppichbodenbelag dazu vorgesehene Unterlage schräg angeordnet ist, um zum Beispiel einen besseren Blick auf die Ware bei deren Bearbeitung zu haben. Vorstellbar ist ferner eine vertikale Anordnung der Vorrichtung.

In bestimmten Fällen ist es vorteilhaft, an der Stelle, wo der Laserstrahl den Teppichpol trifft, also an dem Fokuspunkt ein Kühlmittel aufzubringen, um trotz der auftretenden Wärmeeinwirkung die beabsichtigte Musterbildung optimal zu verwirklichen.

Im übrigen sind erfindungsgemäß unter Verwendung des Verfahrens und der Vorrichtung gemäß der Erfindung hergestellte Teppichbodenbeläge vorgesehen.

Schließlich ist noch festzuhalten, dass in dem Falle, dass das Lasergerät mehr als einen Laserstrahl aussenden kann, in vorteilhafter Weise noch schneller und noch komplexere Musterungen bei Teppichbodenbelägen der hier in Frage stehenden Art verwirklicht werden können. Alternativ kommt auch die Möglichkeit in Betracht, anstelle eines Lasergerätes, das zwei oder mehrere Laserstrahlen aussendet, zwei oder sogar noch mehr Lasergeräte zu verwenden, die gleichzeitig einen Bereich des in Frage stehenden Teppichbodenbelags bearbeiten. Diese Alternative ist vor allem dann vorteilhaft, wenn es sich um Bahnenware von großer Breite handelt, so dass über die gesamte Warenbreite hinweg gleichzeitig mit mehreren Lasergeräten die Laserbearbeitung stattfinden kann.

Die Erfindung wird nachstehend anhand der schematischen Zeichnungen näher erläutert. Es zeigen
- Fig. 1: eine Ansicht schräg von oben auf die Oberseite (Polschicht) eines erfindungsgemäß hergestellten Teppichbodenbelags in Fliesenform sowie ein darüber angeordnetes Lasergerät und
- Fig. 2: eine Schnittansicht eines Teilbereichs der Teppichfliese gemäß Fig. 1

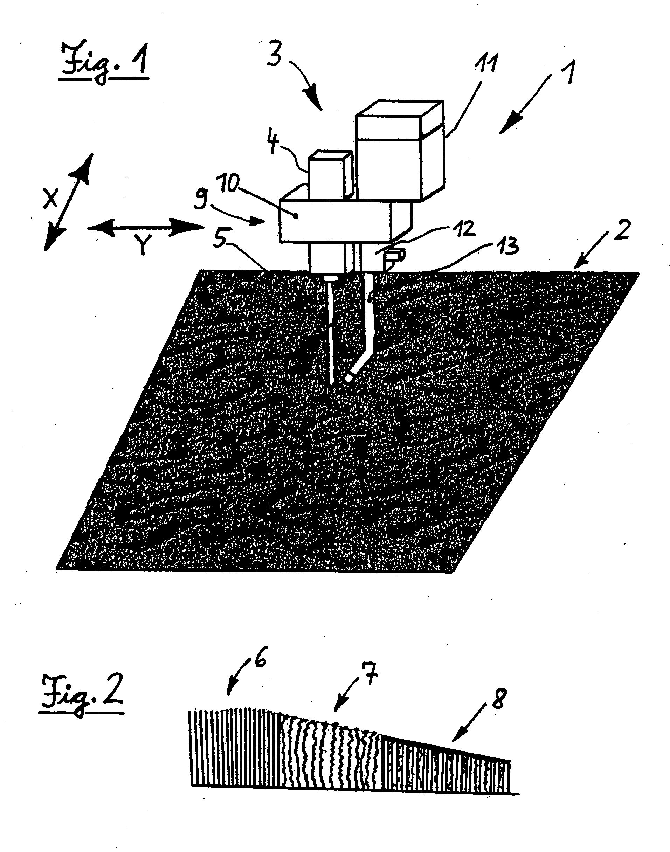

Die in der Fig. 1 gezeigte Vorrichtung 1 ist zur Herstellung eines Teppichbodenbelages 2 vorgesehen. Bei dem Teppichbodenbelag 2 in diesem Ausführungsbeispiel handelt es sich um getuftete Veloursware. Der Teppichbodenbelag 2 ist dabei auf einen in Fig. 1 nicht dargestellten Arbeitstisch oder dergleichen horizontal aufgelegt. Wie in Fig. 1 gut zu erkennen ist, befindet sich in einem gewissen Abstand über dem Teppichbodenbelag 2 ein Lasergerät 3, das zum Zwecke der Bildung eines Musters auf bzw. in dem Teppichbodenbelag 2 vorgesehen ist. Dabei umfasst das Lasergerät 3 eine ebenfalls in Fig. 1 nicht näher dargestellte Stromquelle für einen Laserstrahlgenerator 4, an dem ein auf die Oberseite des Teppichbodenbelags 2 gerichtetes Laserstrahlrohr 5 angeordnet ist.

Das freie (untere) Ende dieses Laserstrahlrohres 5 berührt beim Einsatz der Vorrichtung 1 den Teppichbodenbelag 2 nicht. Vielmehr bleibt ein Abstand von beispielsweise 3 bis 10 mm zwischen diesem freien Ende des Laserstrahlrohres 5 sowie der Oberseite bzw. Polschicht des Teppichbodenbelags 2.

Wenn nun der Laserstrahlgenerator 4 aktiviert wird, sendet das Lasergerät 3 durch das Laserstrahlrohr 5 einen Laserstrahl aus, der in seinem Fokuspunkt auf eine Stelle des Teppichbodenbelag 2 trifft. Dies führt dort infolge der Wärmeeinwirkung zu einer Veränderung des Teppichfasermaterials und einer erhöhten Kräuselung bis hin zur Plastifizierung desselben. Diese Plastifizierung ist möglich wegen des thermisch plastifizierbaren Fasermaterials, das wenigstens teilweise in der Velours-Teppichware enthalten ist.

Die Veränderung des Teppichmaterials durch die Laserbehandlung wird in Fig. 2 dargestellt. Dabei ist dort links in der Zeichnung ein unbehandelter Teppichoberflächenbereich 6 zu sehen. Rechts davon, also in der Mitte des Ausschnitts von Fig. 2, ist ein in Abstufungen laserbehandelter Teppichbereich 7 zu erkennen. Die Faserformation ist dort noch erkennbar. Ganz rechts im Bereich 8 ist dann bereits eine plastifizierte Oberfläche zu sehen.

Das Lasergerät 3 ist im übrigen mit einer Verfahreinrichtung 9 ausgestattet, zu der ein in X- und Y-Richtung horizontal verfahrbarer Schlitten 10 gehört. Dies bedeutet, dass das Lasergerät 3 mit Hilfe dieser Verfahreinrichtung 9 von Hand oder gegebenenfalls mit Hilfe einer elektronischen programmierbaren Steuerungseinheit 11 in die X- bzw. Y-Richtung verfahren werden kann, um so entsprechende Teppichmuster zu erzeugen. Fig. 1 zeigt ein auf diese Weise hergestelltes Schlangen- bzw. Würmchenmuster, wobei die in der Fig. 1 dunkel bzw. schwarz dargestellten Bereiche des Teppichbodenbelags 2 solche Bereiche sind, die durch die Laserbehandlung plastifiziert wurden. Das Lasergerät 3 weist außerdem einen Kühlmittelbehälter 12 auf, an dem eine Kühlmittelzufuhrleitung 13 angebracht ist. Das freie Ende dieser Kühlmittelzufuhrleitung 13 befindet sich nahe dem freien Ende des Laserstrahlrohres 5, damit das Kühlmittel bei Bedarf in den Bereich des Fokuspunktes des von dem Lasergerät 3 ausgesendeten Laserstrahles gelangt.

Schließlich sei noch bemerkt, dass das Lasergerät 3 nicht nur in der horizontalen X-bzw. Y-Richtung verfahren werden kann, sondern auch in senkrechter bzw. vertikaler Richtung auf- bzw. abwärts verfahren werden kann. Dadurch lässt sich der Abstand zwischen dem freien Ende des Laserstrahlrohres 5 und der Oberseite des Teppichbodenbelags 2 verändern. Auch dies kann computergesteuert geschehen.

## Patentansprüche

1. Verfahren zur Herstellung von Mustern bei Teppichbodenbelägen, die wenigstens teilweise aus thermisch plastifizierbarem Fasermaterial bestehen,
**dadurch gekennzeichnet,**
**dass** die Oberseite des Teppichbodenbelags (2) mittels eines Lasergerätes (3) thermisch behandelt wird und dass dieses Lasergerät (3) über dem Teppichbodenbelag (2) und im Abstand von diesem angeordnet und verfahrbar ist, wobei mit dem Lasergerät (3) mindestens ein Laserstrahl auf die Oberseite des Teppichbodenbelags (2) gerichtet wird und durch die daraus resultierende Wärmeeinwirkung des Laserstrahls bzw. der Laserstrahlen und die Verfahrbewegung des Lasergerätes (3) das Teppichoberseitenmaterial zum Zwecke der Teppichmusterbildung durch Plastifizierung verändert wird.

2. Verfahren nach Anspruch 1, **dadurch gekennzeichnet, dass** die thermische Oberflächenbehandlung des Teppichbodenbelags (2) mit einem Lasergerät (3) durch geführt wird, das von einer programmierbaren elektronischen Steuerungseinheit (11) gesteuert wird, um bestimmte Teppichmuster herzustellen.

3. Verfahren nach Anspruch 1 oder 2, **dadurch gekennzeichnet, dass** der Teppichbodenbelag (2) während der thermischen Oberflächenbehandlung auf der Teppichfertigungsstrecke vorwärts bewegt wird.

4. Vorrichtung zur Durchführung des Verfahrens nach einem der Ansprüche 1 bis 3, **dadurch gekennzeichnet, dass** ein Tisch oder dergleichen zur horizontalen Auflage des Teppichbodenbelags (2) vorgesehen ist und darüber sowie im Abstand von dem Teppichbodenbelag (2) ein verfahrbares Lasergerät (3) angeordnet ist, mit dem mindestens ein Laserstrahl auf die Oberseite des Teppichbodenbelags (2) zum Zwecke der Teppichmusterbildung gerichtet werden kann.

5. Vorrichtung nach Anspruch 4, **dadurch gekennzeichnet, dass** das Lasergerät (3) eine Verfahreinrichtung (9) umfasst, mit der es oberhalb des Teppichbodenbelages (2) in horizontaler und vertikaler Richtung frei verfahrbar ist.

6. Vorrichtung nach einem der Ansprüche 4 bis 5, **dadurch gekennzeichnet, dass** diese Vorrichtung (1) für die Verfahrbewegung des Lasergerätes (3) eine programmierbare Steuerungseinheit (11) aufweist, um bestimmte Teppichmuster herzustellen.

7. Vorrichtung nach einem der Ansprüche 4 bis 6, **dadurch gekennzeichnet, dass** zur lokalen Kühlung des Bereiches des Teppichbodenbelages (2), auf den ein Laserstrahl trifft, eine Kühlmittelzufuhrleitung (13) an dem Lasergerät (3) angebracht ist.

8. Unter Verwendung des Verfahrens und der Vorrichtung gemäß einem der Ansprüche 1 bis 7 hergestellte Teppichbodenbeläge.
